# FASCICULE DE BREVET EUROPEEN

(11) **EP 3 364 780 B1**
(45) Date de publication et mention de la délivrance du brevet: **14.08.2019**
(21) Numéro de dépôt: 16797590.3
(22) Date de dépôt: 18.10.2016
(51) Int. Cl.: A23P 30/40, A21D 2/18, A21D 8/02

(54) **PÂTE ALIMENTAIRE ET PROCÉDÉ DE FABRICATION D'UNE TELLE PÂTE**
LEBENSMITTELTEIG UND VERFAHREN ZUR HERSTELLUNG SOLCH EINES TEIGES
FOOD DOUGH AND METHOD FOR PRODUCING SUCH A DOUGH

(30) Priorité: 22.10.2015 FR 1560094
(43) Date de publication de la demande: 29.08.2018
(73) Titulaire: Genialis, 18250 Henrichemont (FR)
(72) Inventeur: DESJARDINS-LAVISSE, Isabelle, 18250 Henrichemont (FR); GILLET, Guillaume, 41300 Salbris (FR); GRESSIN, Laurianne, 18110 Vasselay (FR)
(74) Mandataire: IP Trust
(86) Numéro de dépôt international: PCT/FR2016/052681
(87) Numéro de publication internationale: WO 2017/068271

(56) Documents cités:
- WO-A1-2010/125156
- DD-A3- 261 908
- GB-A- 282 923
- JP-A- S5 917 950
- US-A- 5 116 631
- US-A1- 2012 064 199
- DATABASE WPI Week 197526 Thomson Scientific, London, GB; AN 1975-43784W XP002760531, -& SU 437 510 A1 (STARCH PROD RES INS) 30 juillet 1974 (1974-07-30)

## Description

L'invention concerne une pâte alimentaire, en particulier à teneur réduite en sucre, et un procédé pour la réalisation d'une telle pâte alimentaire. L'invention concerne également un produit obtenu à partir de la pâte alimentaire.

Il est connu de réaliser une pâte alimentaire sous forme de mousse obtenue après incorporation de gaz dans un produit alimentaire. Sans être exhaustif, on peut citer comme exemples la mousse de blanc d'oeufs, et les produits obtenu à partir d'une telle pâte, tels que les meringues sous toutes leurs formes, les macarons, les génoises, les soufflés, les mousses crues telles que la mousse au chocolat, ainsi que de nombreuses autres pâtisseries.

Dans leurs applications agroalimentaires, ces mousses sont stabilisées le plus souvent par l'ajout d'un agent stabilisant comme des monosaccharides, oligosaccharides, polysaccharides ou protéines. De façon générale, les sucres sont largement utilisés pour réaliser des produits de pâtisserie à base de mousse de blancs d'oeufs. Les hydrocolloïdes, agents de textures hydrosolubles peuvent également être employés.

On connait ainsi de nombreux brevets portant sur des formulations particulières pour parvenir à l'obtention de mousses stables, c'est-à-dire ne subissant pas de variation importante de leur volume lorsqu'elles sont par exemple triturées, incorporées à d'autres pâtes, mélangées à d'autres ingrédients, cuites ou congelées.

Toutefois, un inconvénient de ces formulations réside dans le fait qu'elles sont habituellement très collantes et liquides, et donc difficiles à manipuler lors du dressage avant cuisson. Par ailleurs, les pâtisseries obtenues après cuisson ne permettent pas d'obtenir toutes les propriétés organoleptiques et gustatives attendues.

En outre, les formulations déjà connues comprennent le plus souvent une quantité élevée de sucre, ce qui ne permet pas de réaliser des produits alimentaires à teneur réduite en sucre, voire ayant un gout salé.

La demande de brevet JPS5917950 décrit une pâte pour pâtisserie de type meringue dépourvue de sucre comprenant du blanc d'oeuf et de la gomme de konjak.

On connait également des pâtes pour pâtisseries à teneur réduite en sucre. En particulier, le brevet FR 2 944 949 décrit une pâte pour pâtisserie de type meringue ou macaron comprenant du blanc d'oeuf et entre 2 et 10 g de protéines moussantes choisies dans le groupe constitué de la β-lactogobuline, de l'α-lactalbumine, de la lactoferrine et de la patatine ou de leurs mélanges, entre 25 et 110 g de maltodextrines, entre 0,5 et 10 g, de préférence 2 à 5 g d'amidon, entre 0,5 et 70 g de sucre glace (saccharose pilé), de glucose cristallisé, de fructose cristallisé et/ou leur mélange 0,2 à 3 g de chlorure de sodium, pour 100 g de blanc d'oeuf mis en oeuvre.

Toutefois, les pâtisseries fabriquées à partir d'une telle pâte se conservent difficilement. En effet, les pâtisseries prennent une texture collante désagréable, en particulier lorsqu'elles sont soumises à des étapes de congélation/décongélation successives.

L'invention vise ainsi à résoudre au moins un de ces inconvénients, et en particulier vise à obtenir une pâte alimentaire permettant d'obtenir des pâtisseries ayant un bon aspect, une bonne texture aérée et une bonne qualité gustative, tout en incorporant une quantité réduite en sucre.

Ainsi, l'invention concerne un procédé de fabrication d'une pâte alimentaire comportant les étapes suivantes :
- préparer un gel comprenant au moins de l'amidon et des maltodextrines dilués dans un milieu fluide,
- préparer une mousse constituée d'un ou plusieurs produits alimentaires, et
- incorporer le gel dans la mousse.

Il est apparu de façon surprenante que l'ajout d'un mélange d'amidon et de maltodextrines sous forme de gel permet de stabiliser la mousse tout en permettant l'ajout d'autres ingrédients sans pour autant faire retomber celle-ci.

En effet, le fait de remplacer tout ou partie du sucre d'une pâte alimentaire avec des maltodextrines incorporées directement sous forme de poudre, éventuellement avec une farine même pré-gélatinisée, ne permet pas d'obtenir une telle pâte alimentaire ayant une texture satisfaisante. La pâte se révèle alors collante, visqueuse et s'écrase totalement lors du dressage avant cuisson. Les produits obtenus après cuisson n'ont pas une structure légère et aérée, ainsi que les propriétés organoleptiques généralement attendues.

Selon une réalisation, on prépare le gel comprenant au moins de l'amidon et des maltodextrines dilués dans un milieu fluide selon les étapes suivantes :
- on réalise une préparation en diluant au moins l'amidon et les maltodextrines dans un milieu fluide,
- on chauffe la préparation, et
- on laisse refroidir la préparation sous forme de gel avant de l'incorporer dans la mousse.

Selon une réalisation, on chauffe la préparation jusqu'à une température de 60 degrés Celsius.

L'invention concerne également une pâte alimentaire comprenant au moins une mousse constituée d'un ou plusieurs produits alimentaires, et au moins de l'amidon et des maltodextrines dilués dans un milieu fluide et incorporés dans la mousse sous forme de gel.

Selon une réalisation, la mousse est réalisée à partir de blancs d'oeufs, de jus de pois chiches, de petit lait, de lait, et/ou d'extrait de saponine.

Selon une réalisation, l'amidon est non hydrolysé.

Selon une réalisation, le gel comprend de la farine et des maltodextrines diluées dans de l'eau.

Selon une réalisation, les maltodextrines du gel ont un dextrose équivalent moyen inférieur à 30, préférentiellement compris entre 15 et 20.

Selon une réalisation, la pâte comprend également au moins une poudre et/ou une purée de légumes ou de fruits, ou un sirop aromatisé.

Selon une réalisation, le gel comprend entre 10% et 20% en masse de farine, entre 10% et 20% en masse de maltodextrines et entre 60% et 80% en masse d'eau.

Selon une réalisation, le gel comprend moins de 80% en masse d'eau.

L'invention concerne également un produit, en particulier une meringue ou un macaron, obtenu après une étape de cuisson ou de séchage de la pâte alimentaire selon l'invention et/ou fabriquée par le procédé selon l'invention.

Bien entendu les différentes caractéristiques, variantes et/ou formes de réalisation de la présente invention peuvent être associées les unes avec les autres selon diverses combinaisons dans la mesure où elles ne sont pas incompatibles ou exclusives les unes des autres.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentés à titre d'exemples non limitatifs, qui pourront servir à compléter la compréhension de la présente invention et l'exposé de sa réalisation et, le cas échéant, contribuer à sa définition, sur lesquelles :
- La figure 1 représente un macaron obtenu à partir d'une pâte alimentaire selon l'invention ;
- La figure 2 représente des meringues obtenues à partir d'une pâte alimentaire selon l'invention ;
- La figure 2A représente une coupe de meringues de la figure 2 ;
- La figure 3 représente un diagramme schématique des différentes étapes du procédé pour réaliser les produits des figures 1 et 2 ; et

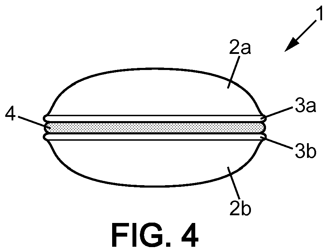

- La figure 4 représente schématiquement un macaron obtenu à partir d'une pâte alimentaire selon l'invention.

Ci-après un exposé détaillé de l'invention assorti d'exemples et de référence aux dessins.

### Pâte alimentaire

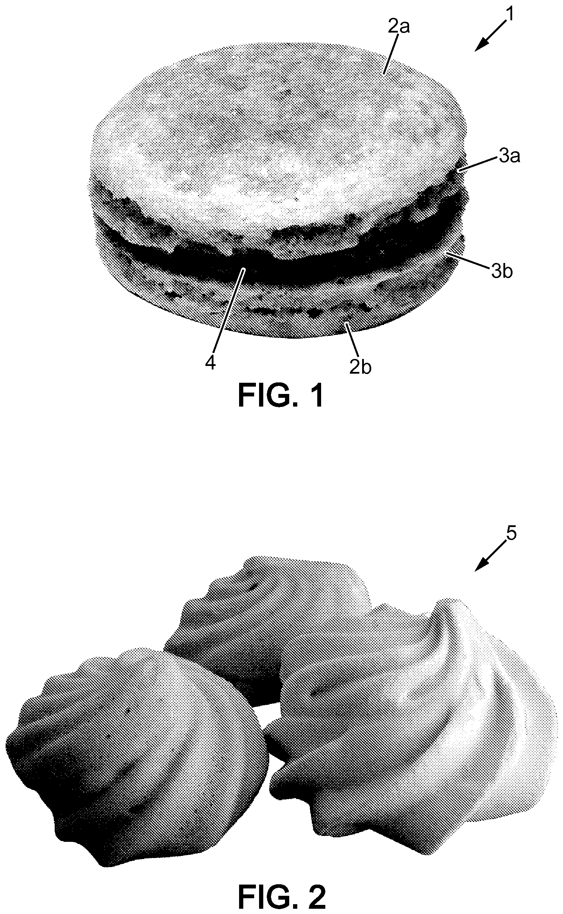

La figure 1 représente un produit alimentaire 1, en particulier un macaron, obtenu à partir d'une pâte alimentaire selon l'invention. Comme illustré sur la figure 1, le macaron est un petit gâteau granuleux et moelleux à la forme arrondie, d'environ 3 à 5 cm de diamètre. Dérivé de la meringue, il est fabriqué traditionnellement à partir de poudre de fruits secs, notamment d'amandes ou de noisettes, de sucre glace, de sucre et de blancs d'oeufs. Le macaron 1 est constitué de deux coques 2a, 2b présentant une collerette caractéristique 3a, 3b formée en bordure à la cuisson. Les coques 2a, 2b sont accolées l'une à l'autre, entre lesquelles se trouve une ganache ou une confiture 4.

La pâte alimentaire comprend une mousse. La mousse peut être réalisée à partir d'un ou plusieurs produits alimentaires.

La mousse peut notamment être réalisée à partir de blancs d'oeufs. Le blanc d'oeuf est un produit naturel et sa constitution peut donc varier en fonction de la provenance. Il est constitué à environ 90% d'eau. Parmi les autres constituants, on trouve des protéines dont le principal est l'ovalbumine (plus de 50% de toutes les protéines).

La mousse peut également être réalisée à partir d'autres ingrédients, pris seuls ou mélangés entre eux, tels que du jus de pois chiches, du petit lait, du lait, de l'extrait de saponine, sans que cette liste ne soit limitative.

La mousse représente entre 15% et 30%, préférentiellement entre 18% et 26% de la masse totale de la pâte alimentaire. Par masse totale, on entend la masse de la pâte alimentaire une fois l'ensemble de ses ingrédients ajoutés.

La pâte alimentaire comprend également de l'amidon et de la (des) maltodextrine(s). Selon l'invention, l'amidon et au moins une partie, voire la totalité, des maltodextrines sont incorporés dans la mousse sous forme de gel.

L'amidon est avantageusement non hydrolysé. Par amidon non hydrolysé, on entend un amidon ayant un dextrose équivalent DE proche de 0, ou sensiblement égal à 0.

Les maltodextrines ont de préférence un dextrose équivalent DE moyen inférieur à 30, préférentiellement compris entre 15 et 20. On distingue ainsi les maltodextrines du sucre traditionnellement utilisé en pâtisserie et majoritairement formé de saccharose.

Par gel, on entend une préparation ayant une structure en réseau et présentant un aspect visqueux intermédiaire entre une phase totalement liquide et une phase totalement solide, différent d'un sirop. Le gel a de préférence une viscosité comprise entre 10 cP et 250 cP (centipoise). Le gel représente entre 15% et 50%, préférentiellement entre 18% et 40% de la masse totale de la pâte alimentaire.

Selon une réalisation, la pâte alimentaire peut également comprendre des maltodextrines sous forme de poudre ou de sirop. Les maltodextrines ajoutées sous forme de poudre ou de sirop représentent moins de 20%, préférentiellement entre 7% et 12%, de la masse totale de la pâte alimentaire.

Du fait de l'ajout de maltodextrines sous forme de gel, ou éventuellement sous forme de poudre ou de sirop, la pâte alimentaire peut comprendre une concentration faible de sucre, en particulier de saccharose, de glucose, de fructose et/ou de leur mélange.

De préférence, la pâte alimentaire ne comprend pas de protéines moussantes. Par protéine moussante, on entend notamment la β-lactogobuline, l'α-lactalbumine, la lactoferrine, la patatine ou leurs mélanges.

De façon générale, outre le gel, la pâte alimentaire ne comprend pas d'agent spécifiquement ajouté pour permettre une stabilisation de la mousse.

Selon une réalisation, la pâte alimentaire comprend également un sirop. Le sirop peut être un sirop de sucre aromatisé, tel que largement disponible dans la grande consommation avec des parfums très variés. Le sirop peut également être un sirop comprenant des maltodextrines, neutres en goût et sans pouvoir sucrant. Le sirop représente 25% à 50%, préférentiellement 30% à 40% de la masse totale de la pâte alimentaire.

La pâte alimentaire peut également comprendre un ou plusieurs autres ingrédients additionnels. Ainsi, selon une réalisation, la pâte alimentaire comprend une purée ou un jus de légumes ou de fruits.

Selon une réalisation, la pâte alimentaire comprend un ou plusieurs ingrédients en poudre, telle qu'une poudre de légumes ou de fruits, des épices. En particulier, la pâte alimentaire peut comprendre de la poudre d'amande afin de réaliser des macarons. Les ingrédients en poudre sont avantageusement réhydratés pour former une pâte avant leur incorporation.

Ces ingrédients additionnels tels que les poudres, purées, jus, épices, représentent moins de 25%, préférentiellement moins de 5%, de la masse totale de la pâte alimentaire.

Pour la réalisation de macaron comme illustré sur la figure 1, seule la poudre d'amande pour la réalisation de macarons représente plus de 5% de la masse totale de la pâte alimentaire.

### Procédé de préparation du gel

Selon l'invention, on réalise dans une première étape (A) une préparation sous forme de gel comprenant au moins de l'amidon, notamment non hydrolysé, et des maltodextrines.

On réalise la préparation en dissolvant (ou diluant) de l'amidon et des maltodextrines dans un milieu fluide.

Le milieu fluide est par exemple du blanc d'oeuf non monté, du jaune d'oeuf ou de l'eau. Le milieu fluide est de préférence de l'eau.

L'amidon est par exemple de la farine. La farine constitue en effet une source d'amidon, notamment non hydrolysé, simple d'usage et largement utilisée par les professionnels agroalimentaires. La farine peut être toute farine de céréale, telle qu'une farine de blé ou de mais, de la farine de châtaigne, de soja ou autres. La farine est de préférence sans gluten.

Selon une réalisation, on dilue entre 10% et 20% en masse de farine, préférentiellement environ 15%, et entre 10% et 20% en masse, préférentiellement 15%, de maltodextrines par rapport à la masse totale de la préparation.

A titre d'exemple, on dilue entre 10g (gramme) et 30g de farine, préférentiellement 20g, et entre 10g et 30g, préférentiellement 20g, de maltodextrines, dans 70g à 140g d'eau, préférentiellement 70g à 100g d'eau.

Le pourcentage total en masse d'eau est de préférence inférieur à 80% de la masse totale de la préparation. En particulier, le pourcentage total en masse d'eau est de préférence compris entre 60% à 80%, préférentiellement 65% de la masse totale de la préparation. L'ajout de davantage d'eau conduit par la suite à un gel trop liquide qui ne permet pas de stabiliser la mousse une fois incorporé à celle-ci.

On chauffe la préparation. La préparation est avantageusement chauffée au-dessus de 55 degrés Celsius. La préparation peut être chauffée jusqu'à une température de 70 degrés Celsius. Préférentiellement, la préparation est chauffée jusqu'à 60 degré Celsius. Le chauffage est de préférence lent, par exemple à l'aide d'une casserole sur feu doux, afin de contrôler la température et de ne pas chauffer excessivement la préparation. On arrête avantageusement de chauffer la préparation dès que celle-ci atteint la température de 60 degrés Celsius.

Lorsque la préparation n'est pas chauffée ou insuffisamment chauffée, on obtient par la suite une pâte alimentaire très liquide, difficile à dresser et qui s'étale alors fortement. On obtient alors des produits après cuisson semblables à des palets, c'est-à-dire plats et croquants. A l'inverse, lorsque la préparation est chauffée au-delà de 70 degrés Celsius, on obtient un gel totalement pris, solide, difficile à incorporer dans la mousse lors de la fabrication de la pâte alimentaire. Celle-ci présente alors des grumeaux et ne tient pas, c'est-à-dire retombe, lorsque d'autres ingrédients sont ajoutés.

On laisse ensuite refroidir la préparation sans chauffage, notamment à température ambiante, éventuellement après avoir continué de mélanger la préparation.

On obtient un gel qui peut éventuellement être stocké quelques jours à basse température, par exemple au réfrigérateur, avant d'être utilisé dans la pâte alimentaire. De préférence, le gel est alors ramené à température ambiante avant d'être incorporé dans la mousse comme cela sera décrit ci-après.

### Procédé de fabrication de la pâte alimentaire

Afin de réaliser la pâte alimentaire, on réalise la mousse dans une deuxième étape (B). De préférence, la mousse selon l'invention est réalisée par foisonnement mécanique. Ainsi, la réalisation de la mousse est par exemple similaire à celle réalisée classiquement par des pâtissiers avec un batteur muni d'un fouet pour monter des blancs en neige. De préférence, la présente invention ne nécessite pas d'autres moyens spécifiques, tels qu'une agitation sous vide partiel, un bullage de gaz, ou une réaction acido-basique, pour réaliser la mousse.

Cette étape (B) a pour effet d'entrainer une expansion très importante du produit constituant la mousse.

Dans une troisième étape (C), on incorpore ensuite dans la mousse le gel préalablement préparé selon le procédé de préparation précédemment décrit. La mousse ne perd pas de volume, de telle sorte que la densité de la pâte alimentaire est dès lors inférieure à 0,500g/cm³, voire inférieure à 0,450 g/cm³.

Dans une quatrième étape (D), on ajoute ensuite le sirop aromatisé, et/ou la purée/jus de légume ou de fruit.

On incorpore également les maltodextrines sous forme de poudre ou de sirop dans la pâte alimentaire.

Le sirop, la purée de légumes ou de fruits, et les maltodextrines sous forme de poudre ou de sirop sont avantageusement incorporés dans la pâte alimentaire postérieurement à l'incorporation du gel pour ne pas faire retomber la mousse.

De la même façon, on incorpore les ingrédients additionnels avantageusement postérieurement au gel dans la pâte alimentaire.

Ainsi, selon un mode de réalisation, l'ordre d'incorporation des ingrédients dans la mousse peut être le suivant :
1) le gel ;
2) le ou les sirops ;
3) les produits sous forme de poudre, tels que les poudres de fruits et de légumes, éventuellement préalablement réhydratés, ou les maltodextrines ; puis
4) les autres liquides, tels que les jus ou purées de fruits ou de légumes, ainsi que par exemple des colorants et/ou des arômes liquides.

Une fois l'ensemble des ingrédients incorporés, la pâte alimentaire est facilement manipulable. Elle peut être triturée, dosée, formée, moulée, etc. sans perdre sa texture aérée. En particulier, la pâte ne présente pas de contraintes de manipulation comme cela est généralement le cas avec des pâtes réalisées selon d'autres formulations connues.

La pâte alimentaire est ensuite soumise à une cinquième étape (E) de séchage ou de cuisson. Cette étape (E) peut être réalisée à l'aide de procédés de chauffage, d'évaporation de l'eau, de captation de l'humidité ou tout autre procédé connu de l'homme du métier.

La pâte est par exemple cuite au four, notamment à une température comprise entre 80 degrés Celsius et 150 degrés Celsius pendant 45 à 180 minutes en fonction de la taille et de la forme des produits réalisés. Cette étape (E) permet notamment d'évaporer une grande partie de l'eau contenue dans la pâte alimentaire.

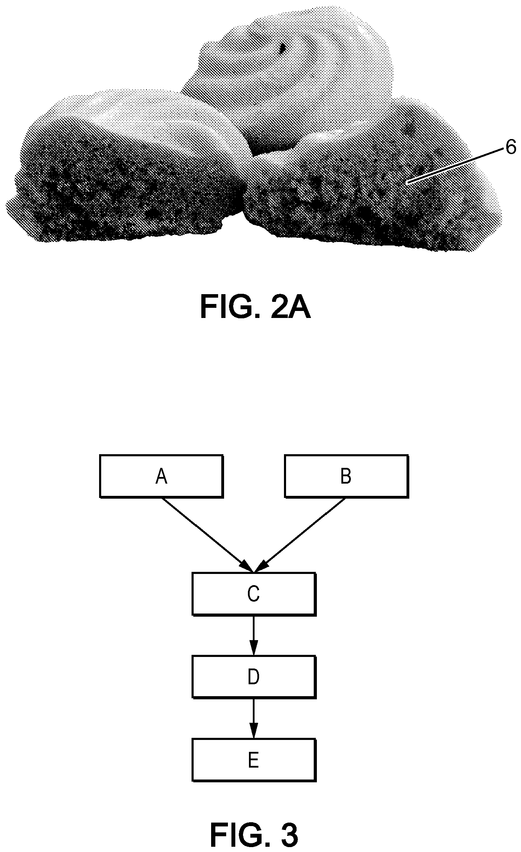

On obtient ainsi des produits à partir de la pâte alimentaire, tel que des meringues ou des macarons, comme ceux représentés sur les figures 1 et 2.

Comme représenté sur la figure 2A, les produits obtenus présentent par exemple une structure interne alvéolée 6, similaire par exemple à celle des meringues traditionnelles. Avantageusement, les produits ont une densité faible, avantageusement inférieure à 0,250g/cm³, voire inférieure à 0,100 g/cm³, ce qui leur donne une texture très légère et fondante en bouche.

### Avantages

Comme cela a déjà été indiqué, la pâte alimentaire selon l'invention permet de réaliser des produits dont le goût sucré peut être totalement absent, de faire ressortir un goût salé ou de préparer des produits à teneur réduite en sucre, voire une teneur nulle en sucre. Outre ces qualités organoleptiques particulières, certains des produits ainsi obtenus peuvent être intéressants du point de vue diététique car ils peuvent contenir une quantité de sucre comprise entre 0% et 25% de la masse totale de pâte alimentaire, contrairement aux recettes traditionnelles qui contiennent de 30 à 65% de sucre.

La pâte permet ainsi d'obtenir des pâtisseries de type meringue ou macaron soit à teneur en sucre réduite, soit des produits « salés » c'est-à-dire dont on ne perçoit que le goût salé, le goût sucré étant totalement absent. Selon une réalisation, la pâte alimentaire permet donc de réaliser une meringue salée ou un macaron salé.

La pâte alimentaire permet également d'incorporer des ingrédients habituellement incompatibles avec les blancs d'oeufs en neige (poudres et purée de légumes ou fruits, sirops, etc.) par les voies de préparation connues. En effet, l'incorporation de tels ingrédients fait habituellement retomber la mousse et conduit à la réalisation de produits finaux non pas aérés, mais plats et croquants.

On décrit ci-après des exemples de fabrication de produits à partir d'une pâte alimentaire selon l'invention. Loin de se vouloir exhaustifs, les exemples ci-dessous permettent de montrer l'étendue du champ d'application de l'invention. En effet, l'invention permet de traiter des typologies de matières premières et de préparations très variées.

### Exemple 1 : Meringue au sirop

Un gel est préparé par dissolution de 20g de farine de maïs et 20g de maltodextrines ayant un dextrose équivalent (DE) égal à 19, dans 70g d'eau.

La préparation est chauffée tout en étant légèrement agitée dans une casserole jusqu'à 60 degrés Celsius puis est ensuite laissée en attente le temps de préparer une mousse de blanc d'oeufs.

Celle-ci est obtenue par foisonnement de 80g de blancs d'oeufs liquides à l'aide d'un robot ménager équipé d'un fouet. Une fois la mousse formée, le gel préparé précédemment y est incorporé, à l'aide du même robot ménager dont la vitesse de rotation a été légèrement réduite.

En laissant le temps à la pâte de redevenir homogène entre chaque ajout et sans modifier l'agitation, 150g de sirop aromatisé au citron sont ensuite ajoutés, puis 40g de maltodextrines sous forme de poudre ayant un dextrose équivalent DE égal à 19 et enfin 3g de concentré de jus de citron.

La pâte alimentaire obtenue est très légère et a une densité d'environ 0,412 g/cm³. Elle est ainsi très similaire à une préparation de meringues obtenue de manière traditionnelle. Elle peut être manipulée sans prendre de soins particuliers pour être mise dans des poches à douilles ou une petite doseuse mécanique. Après dressage sur plaques de cuisson de petites formes étoilées, celles-ci sont cuites dans un four traditionnel à 100 degrés Celsius pendant 75 minutes.

Les produits obtenus sont très comparables à des meringues, à l'exception du fait qu'ils présentent un goût de citron prononcé, incluant l'acidité du fruit, et un goût de sucre quasiment absent. Il est ainsi possible de consommer plusieurs meringues obtenues par le nouveau procédé sans phénomène d'écoeurement dû à la trop forte quantité de sucre présente dans les produits traditionnels. Les produits obtenus ont une densité environ égale à 0,05 g/cm³.

Les produits peuvent ensuite être conditionnés à loisir et en fonction de la forme de consommation, de la chaine de distribution ou de toute autre contrainte à prendre en compte pour la vente et la bonne utilisation du produit, par exemple dans des sachets plastique ou des boites plastiques. Ils peuvent également être congelés et décongelés sans subir de modification notable de leurs textures.

Un exemple de meringues 5 obtenues selon l'invention est représenté sur les figures 2 et 2A.

### Exemple 2 : meringue salée

Un gel est préparé par dissolution de 10g de farine de maïs et 10g de maltodextrines ayant un dextrose équivalent DE égal à 19 dans 100g d'eau.

La préparation est chauffée tout en étant légèrement agitée dans une casserole jusqu'à 60 degrés Celsius puis est ensuite laissée en attente le temps de préparer une mousse de blanc d'oeufs.

Celle-ci est obtenue par foisonnement de 80g de jus de pois chiches à l'aide d'un robot ménager équipé d'un fouet. Une fois la mousse bien formée, le gel obtenu précédemment y est incorporé, à l'aide du même robot ménager dont la vitesse de rotation a été légèrement réduite.

En laissant le temps à la pâte de redevenir homogène entre chaque ajout et sans modifier l'agitation, 150g d'un sirop de maltodextrines obtenu par dissolution de 60g de maltodextrines de DE égal à 16 dans 90g d'eau sont ajoutés, puis 25g de maltodextrines ayant un dextrose équivalent (DE) égal à 16 et enfin 39g d'un mélange de 30g d'eau, de 8g de poudre de tomates et de 1g de sel.

La pâte alimentaire obtenue est très légère et a une densité d'environ 0,440 g/cm³. Elle est ainsi très similaire à une préparation de meringues obtenue de manière traditionnelle. Elle peut être manipulée sans prendre de soins particuliers pour être mise dans des poches à douilles ou une petite doseuse mécanique. Après dressage sur plaques de cuisson de formes de type fonds de pavlovas, celles-ci sont cuites dans un four traditionnel à 100 degrés Celsius pendant 180 minutes.

Les produits obtenus sont très comparables à des fonds de pavlovas obtenues à partir de meringues traditionnelles, à l'exception du fait qu'ils présentent un goût de tomate prononcé et aucun goût sucré. Les fonds peuvent ensuite être garnis d'une mousse de légumes pour obtenir une pavlova entièrement salée, qui peut être éventuellement stockée au congélateur en attendant d'être consommée. Le fond meringué reste solide mais fondant après décongélation. Les produits obtenus ont une densité environ égale à 0,078 g/cm³.

### Exemple 3 : macaron salé/nature

Un gel est préparé par dissolution de 10g de farine de châtaigne et 10g de maltodextrines ayant un dextrose équivalent DE égal à 19 dans 100g d'eau.

La préparation est chauffée tout en étant légèrement agitée dans une casserole jusqu'à 60 degrés Celsius puis est ensuite laissé en attente le temps de préparer une mousse de blanc d'oeufs.

Celle-ci est obtenue par foisonnement de 80g de blancs d'oeuf à l'aide d'un robot ménager équipé d'un fouet. Une fois la mousse bien formée, le gel obtenu précédemment y est incorporé, à l'aide du même robot ménager dont la vitesse de rotation a été légèrement réduite.

En laissant le temps à la préparation de redevenir homogène entre chaque ajout et sans modifier l'agitation, sont ajoutés 100g d'un sirop de maltodextrine obtenu par dissolution de 50g de maltodextrine de DE égal à 6 dans 50g d'eau, puis 25g de maltodextrine ayant un dextrose équivalent (DE) égal à 19. Le robot est finalement équipé d'une feuille plate et la vitesse de rotation réglée au minimum avant l'ajout de 80g de poudres d'amandes.

La pâte est homogène et prête à être pochée après environ 2 minutes de mélange. La pâte alimentaire obtenue est très légère et très similaire à une préparation de macarons obtenue de manière traditionnelle. Elle est en particulier lisse et brillante. Elle peut être manipulée sans prendre de soins particuliers pour être mise dans des poches à douilles ou une petite doseuse mécanique. Après dressage sur plaques de cuisson les produits sont cuits 15 minutes à 120°C puis 20 minutes à 140°C dans un four armoire adapté aux pâtisseries.

Les coques obtenues sont semblables à des coques de macarons réalisées de façon traditionnelle. Elles sont lisses et plates et présentent une collerette bien marquée. Elles peuvent indifféremment être assemblées avec des garnitures de type crème au beurre ou confiture avant d'être congelées. En particulier, cette coque « neutre », ne présentant pas de goût sucré mais présentant un goût d'amande marqué, peut être assemblée indifféremment avec des produits sucrés ou salés. Après décongélation, les produits assemblés possèdent les caractéristiques de craquant de l'extérieur de la coque et de moelleux de l'intérieur propres au macaron. Les produits obtenus ont une densité environ égale à 0,21 g/cm³.

Un exemple de macaron 1 obtenu selon l'invention est représenté sur la figure 1.

Bien évidemment, l'invention n'est pas limitée aux modes de réalisation décrits précédemment et fournis uniquement à titre d'exemple. Elle englobe diverses modifications, formes alternatives et autres variantes que pourra envisager l'homme du métier dans le cadre de la présente invention et notamment toutes combinaisons des différents modes décrits précédemment, pouvant être pris séparément ou en association.

En particulier, l'invention permet également d'obtenir d'autres produits tels que les génoises, les soufflés, les mousses crues telle que la mousse au chocolat, ainsi que de nombreuses autres pâtisseries.

## Revendications

1. Procédé de fabrication d'une pâte alimentaire comportant les étapes suivantes :
(A) préparer un gel comprenant au moins de l'amidon et des maltodextrines dilués dans un milieu fluide,
(B) préparer une mousse constituée d'un ou plusieurs produits alimentaires, et
(C) incorporer le gel dans la mousse.

2. Procédé de fabrication selon la revendication 1, dans lequel on prépare le gel comprenant au moins de l'amidon et des maltodextrines dilués dans un milieu fluide selon les étapes suivantes :
- on réalise une préparation en diluant au moins l'amidon et les maltodextrines dans un milieu fluide,
- on chauffe la préparation, et
- on laisse refroidir la préparation sous forme de gel avant de l'incorporer dans la mousse.

3. Procédé de fabrication selon la revendication 2, dans lequel on chauffe la préparation jusqu'à une température de 60 degrés Celsius.

4. Pâte alimentaire comprenant au moins une mousse constituée d'un ou plusieurs produits alimentaires, et au moins de l'amidon et des maltodextrines dilués dans un milieu fluide et incorporés dans la mousse sous forme de gel.

5. Pâte alimentaire selon la revendication 4, dans laquelle la mousse est réalisée à partir de blancs d'oeufs, de jus de pois chiches, de petit lait, de lait, et/ou d'extrait de saponine.

6. Pâte alimentaire selon la revendication 4 ou 5, dans laquelle l'amidon est non hydrolysé.

7. Pâte alimentaire selon l'une quelconque des revendications 4 à 6, dans laquelle le gel comprend de la farine et des maltodextrines diluées dans de l'eau.

8. Pâte alimentaire selon l'une quelconque des revendications 4 à 7, dans laquelle les maltodextrines du gel ont un dextrose équivalent moyen (DE) inférieur à 30, préférentiellement compris entre 15 et 20.

9. Pâte alimentaire selon l'une quelconque des revendications 4 à 8, comprenant également au moins une poudre et/ou une purée de légumes ou de fruits, ou un sirop aromatisé.

10. Pâte alimentaire selon l'une quelconque des revendications 4 à 9, dans laquelle le gel comprend entre 10% et 20% en masse de farine, entre 10% et 20% en masse de maltodextrines et entre 60% et 80% en masse d'eau.

11. Pâte alimentaire selon l'une quelconque des revendications 4 à 10, dans laquelle le gel comprend moins de 80% en masse d'eau.

12. Produit, en particulier meringue (5) ou macaron (1), obtenu après une étape de cuisson ou de séchage de la pâte alimentaire selon l'une quelconque des revendications 4 à 11, et/ou fabriquée par le procédé selon l'une quelconques des revendications 1 à 3.

## Patentansprüche

1. Verfahren zur Herstellung einer Teigware, das folgende Schritte umfasst:
(A) die Zubereitung eines Gels, das zumindest Stärke und in einem flüssigen Medium aufgelöste Maltodextrine umfasst,
(B) die Zubereitung eines Schaums bestehend aus einem oder mehreren Lebensmittelprodukten und
(C) das Einarbeiten des Gels in den Schaum.

2. Herstellungsverfahren nach Anspruch 1, in dem man das Gel, welches zumindest Stärke und in einem flüssigen Medium aufgelöste Maltordextrine umfasst, in folgenden Schritten zubereitet:
- Man stellt eine Zubereitung her, indem man zumindest die Stärke und die Maltodextrine in einem flüssigen Medium auflöst.
- Man erhitzt die Zubereitung und
- lässt die Zubereitung in Form eines Gels erkalten, bevor man sie in den Schaum einarbeitet.

3. Herstellungsverfahren nach Anspruch 2, in dem man die Zubereitung erhitzt, bis eine Temperatur von 60 Grad Celsius erreicht ist.

4. Teigware, die zumindest einen Schaum bestehend aus einem oder mehreren Lebensmittelprodukten umfasst, und zumindest Stärke und in einem flüssigen Medium aufgelöste und in Form von Gel in den Schaum eingearbeitete Maltordextrine.

5. Teigware nach Anspruch 4, in dem der Schaum hergestellt wird aus Eiweiß, Kichererbsensaft, Molke, Mich und/oder Saponinextrakt hergestellt wird.

6. Teigware nach Anspruch 4 oder 5, in der die Stärke nicht hydrolisiert ist.

7. Teigware nach einem der Ansprüche 4 bis 6, in der das Gel Mehl und in Wasser aufgelöste Maltodextrine umfasst.

8. Teigware nach einem der Ansprüche 4 bis 7, in dem die Maltodextrine des Gels ein mittleres Dextrose-Äquivalent (DE) von unter 30, vorzugsweise jedoch zwischen 15 und 20 haben.

9. Teigware nach einem der Ansprüche 4 bis 8, die darüber hinaus zumindest ein Pulver und/oder ein Gemüse- oder Früchtepüree oder einen aromatisierten Sirup umfasst.

10. Teigwaren nach einem der Ansprüche 4 bis 9, in dem das Gel einen Mehlgewichtsanteil von 10% bis 20%, einen Maltodextringewichtsanteil von 10% bis 20% und einen Wassergewichtsanteil von 60% bis 80% umfasst.

11. Teigware nach einem der Ansprüche 4 bis 10%, in der das Gel einen Wassergewichtsanteil von zumindest 80% umfasst.

12. Produkt, insbesondere Baiser (5) oder Macaron (1), das nach einem Schritt des Backens oder Trocknens der Teigware nach einem der Ansprüche 4 bis 11 erzielt und/oder nach dem Verfahren nach einem der Ansprüche 1 bis 3 hergestellt wurde.

## Claims

1. A method for producing a food dough, comprising the following steps of:
(A) preparing a gel comprising at least starch and maltodextrins diluted in a fluid medium,
(B) preparing a mousse consisting of one or more food product(s), and
(C) incorporating the gel into the mousse.

2. A production method according to claim 1, wherein the gel is prepared and comprises at least starch and maltodextrins diluted in a fluid medium according to the following steps:
- a preparation is made by diluting at least starch and maltodextrins in a fluid medium,
- the preparation is heated, and
- the preparation is allowed to cool into a gel prior to being incorporated into the mousse.

3. A production method according to claim 2, wherein the preparation is heated up to a temperature of 60 degrees Celsius.

4. A food dough comprising at least one mousse consisting of one or more food product (s), and at least starch and maltodextrins diluted in a fluid medium and incorporated into the mousse as a gel.

5. A food dough according to claim 4, wherein the mousse is made from egg whites, chickpeas juice, whey, milk, and/or saponin extract.

6. A food dough according to claim 4 or 5, wherein starch is unhydrolyzed.

7. A food dough according to any one of claims 4 to 6, wherein the gel comprises flour and maltodextrins diluted in water.

8. A food dough according to any one of claims 4 to 7, wherein the maltodextrins of the gel have an average dextrose equivalent (DE) below 30, preferably between 15 and 20.

9. A food dough according to any one of claims 4 to 8, further comprising at least a powder and/or a vegetable or fruit puree, or a flavor syrup.

10. A food dough according to any one of claims 4 to 9, wherein the gel comprises between 10% and 20% by weight of flour, between 10% and 20% by weight of maltodextrins and between 60% and 80% by weight of water.

11. A food dough according to any one of claims 4 to 10, wherein the gel comprises less than 80% by weight of water.

12. A product, especially a meringue (5) or a macaron (1), obtained after a step of baking or drying (E) the food dough according to any one of claims 4 to 11 and/or produced with the method according to any one of claims 1 to 3.
